# EUROPÄISCHE PATENTSCHRIFT

(11) **EP 2 218 605 B1**
(45) Veröffentlichungstag und Bekanntmachung des Hinweises auf die Patenterteilung: **17.08.2011**
(21) Anmeldenummer: 10450016.0
(22) Anmeldetag: 12.02.2010
(51) Int. Cl.: B60K 17/28, F16H 37/02, F16H 37/08

(54) **Landwirtschaftliches Nutzfahrzeug**
Agricultural vehicle
Véhicule utilitaire agricole

(30) Priorität: 13.02.2009 AT 2492009
(43) Veröffentlichungstag der Anmeldung: 18.08.2010
(73) Patentinhaber: Rehberger, Ingrid, 5143 Feldkirchen bei Mattighofen (AT)
(72) Erfinder: Gottfried, Johann Anton, 5143 Feldkirchen bei Mattighofen (AT)
(74) Vertreter: Hübscher, Helmut

(56) Entgegenhaltungen:
- EP-A2- 1 637 383
- GB-A- 852 348
- US-A- 3 442 346

## Beschreibung

Die Erfindung bezieht sich auf ein landwirtschaftliches Nutzfahrzeug mit einem Antriebsmotor, mit einem über wenigstens eine Fahrkupplung an den Antriebsmotor angeschlossenen, mit einem Kegelscheibengetriebe verbundenen Verteilergetriebe und mit einer an das Kegelscheibengetriebe anschließbaren, wahlweise unabhängig von einem Antriebstrang für wenigstens eine angetriebene Achse antreibbaren Zapfwelle.

Um bei einem bekannten Nutzfahrzeug dieser Art das Einsatzgebiet zu erweitern und die Nutzlast zu steigern, ist es bekannt (EP 1 637 383 A2), die Zapfwelle entweder mit dem Verteilergetriebe oder mit der Abtriebswelle des Kegelscheibengetriebes zu verbinden, wobei die Umschalteinrichtung in Form einer Schaltmuffe ausgebildet ist. Wird die Antriebswelle für die über ein Zwischengetriebe antreibbare Zapfwelle mit Hilfe der Schaltmuffe mit der Abtriebswelle des Kegelscheibengetriebes verbunden, das als Fahrgetriebe eingesetzt ist, so weist die Zapfwelle eine der Fahrgeschwindigkeit proportionale Drehzahl auf und kann als sogenannte Wegzapfwelle eingesetzt werden. Über eine entsprechende Steuerung des Kegelscheibengetriebes kann dabei die Fahrgeschwindigkeit und/oder die Drehzahl der Zapfwelle oder des Motors geregelt werden. Bei Stillstand des Nutzfahrzeugs kann die Zapfwelle für sich unabhängig von der Motordrehzahl angetrieben werden. Wird die Antriebswelle für die Zapfwelle jedoch über das Verteilergetriebe unter Umgehung des Kegelscheibengetriebes angetrieben, so wird ein von der Motordrehzahl abhängiger Antrieb der Zapfwelle sichergestellt. Nachteilig ist allerdings, dass das stufenlose Kegelscheibengetriebe, mit dem eine Anpassung des Drehmoments auf der Abtriebseite bzw. der Drehzahl auf der Antriebsseite möglich ist und das daher eine vorteilhafte Voraussetzung für den Einsatz leichter Motoren anstelle der für diesen Einsatzzweck üblichen schweren, langhubigen Dieselmotoren mit einem steilen Drehmomentanstieg darstellt, den jeweiligen vom Einsatz des Nutzfahrzeugs abhängigen, unter Umständen rauen Belastungsbedingungen unterworfen wird, sodass mit einem erheblichen Verschleiß bzw. einer Rillenbildung in den Kegelscheiben gerechnet werden muss, insbesondere wenn mit einem über längere Zeitabschnitte konstanten Übersetzungsverhältnis gefahren wird, wie dies beispielsweise beim Pflügen der Fall ist.

Der Erfindung liegt somit die Aufgabe zugrunde, ein landwirtschaftliches Nutzfahrzeug der eingangs geschilderten Art so auszugestalten, dass trotz vergleichsweise einfacher Konstruktionsbedingungen ein schonender Einsatz des Kegelscheibengetriebes möglich wird, ohne auf die Vorteile eines solchen Kegelscheibengetriebes, insbesondere hinsichtlich des Zapfwellenantriebs, verzichten zu müssen.

Die Erfindung löst die gestellte Aufgabe dadurch, dass der Antriebstrang für die angetriebene Achse ein wahlweise an das Verteilergetriebe oder das Kegelscheibengetriebe anschließbares, engstufiges, mehrgängiges Schaltgetriebe umfasst.

Das Vorsehen eines über das Verteilergetriebe unter Umgehung des Kegelscheibengetriebes beaufschlagbaren Schaltgetriebes für den Antriebstrang bietet die vorteilhafte Möglichkeit, bei hinsichtlich des Fahrantriebs rauen Bedingungen das Kegelscheibengetriebe aus dem Antriebstrang zu nehmen und daher zu schonen, sodass mit einer erheblich gesteigerten Standzeit für das Kegelscheibengetriebe gerechnet werden kann. Für den Zapfwellenantrieb kann dabei das Kegelscheibengetriebe genützt werden, sodass unterschiedlich gesteuerte, von der Fahrgeschwindigkeit des Nutzfahrzeugs unabhängige Drehzahlen für die Zapfwelle möglich sind. Wird dem Schaltgetriebe für den Antriebstrang das Kegelscheibengetriebe vorgeschaltet, so wird für schnellere Fahrten eine Geschwindigkeitsregelung ausschließlich über das Kegelscheibengetriebe möglich, wenn das nachgeordnete Schaltgetriebe aufgrund einer vorgegebenen Schaltstufe eine bestimmte Übersetzung vorgibt.

Mit Hilfe des Kegelscheibengetriebes ist aber auch ein vorteilhafter Betrieb bestimmter landwirtschaftlicher Geräte möglich, die einerseits eine konstante Fahrgeschwindigkeit und anderseits einen konstanten Zapfwellenantrieb erfordern, wie dies beispielsweise bei Miststreuern der Fall ist. Zu diesem Zweck kann das Kegelscheibengetriebe eine Steuereinrichtung für die Drehzahl der Abtriebswelle des Kegelscheibengetriebes aufweisen. Da im geschilderten Einsatzfall das Kegelscheibengetriebe in den Antriebstrang eingebunden ist, kann bei höheren Motordrehzahlen beim Bergauffahren und bei niedrigen Motordrehzahlen beim Bergabfahren über die Steuereinrichtung die Drehzahl der Abtriebswelle des Kegelscheibengetriebes konstant gehalten werden, was aufgrund der vorgegebenen Schaltstufe des Schaltgetriebes eine konstante Fahrgeschwindigkeit und aufgrund des Zapfwellenantriebs über das Kegelscheibengetriebe auch einen konstanten Antrieb des Miststreuers mit sich bringt. Die Streudichte hängt von der Fahrgeschwindigkeit und damit von der wirksamen Schaltstufe des Schaltgetriebes ab, das aus diesem Grund engstufig ausgebildet sein muss, um eine Anpassung an die jeweiligen mit dem Nutzfahrzeug zu betreibenden Geräte zu ermöglichen.

Wird der Antriebsmotor des Nutzfahrzeugs über eine Drehzahlregelung gesteuert, so ergibt sich eine konstante Drehzahl für die Zapfwelle bereits zufolge der Drehzahlregelung des Antriebsmotors. Über das Kegelscheibengetriebe kann allerdings die Drehzahl der Zapfwelle zusätzlich den jeweiligen Anforderungen entsprechend eingestellt werden, und zwar unter günstigen Belastungsverhältnissen für das Kegelscheibengetriebe.

Wird eine Zapfwelle benötigt, die unabhängig vom Kegelscheibengetriebe über das Verteilergetriebe in Abhängigkeit von der Motordrehzahl angetrieben wird, so kann eine in Abhängigkeit vom Antrieb des Schaltgetriebes über das Kegelscheibengetriebe an das Verteilergetriebe anschließbare Zapfwelle vorgesehen sein. Diese Zapfwelle kann als gesonderte Zapfwelle beispielsweise im Frontbereich des Nutzfahrzeugs vorgesehen werden. Es ist aber auch möglich, die vom Kegelscheibengetriebe antreibbare Zapfwelle als wahlweise an das Verteilergetriebe anschließbare Zapfwelle auszubilden oder mit einer solchen Zapfwelle zu verbinden.

Beim Einsatz von schweren Dieselmotoren mit einer steilen Drehmomentcharakteristik ergibt sich bei niedrigen Drehzahlen der Nachteil, dass die mögliche Leistung des Antriebsmotors nicht genützt werden kann. Um hier Abhilfe zu schaffen, kann das Schaltgetriebe mit Hilfe eines gesonderten Hydraulikmotors angetrieben werden, der den Antriebsmotor in seinem unteren Leistungsbereich vorteilhaft für den Fahrantrieb ersetzt, sodass die hohe Leistung des Antriebsmotors an der Zapfwelle zur Verfügung steht. Da landwirtschaftliche Nutzfahrzeuge üblicherweise mit einem eigenen Hydrauliksystem ausgerüstet sind, kann ein solcher Hydraulikmotor, der wie das Kegelscheibengetriebe stufenlos verstellt werden kann, ohne besonderen Mehraufwand an das bestehende Hydrauliksystem angeschlossen werden.

Besonders einfache Konstruktionsverhältnisse ergeben sich, wenn die Vorgelegewelle des mehrgängigen Schaltgetriebes als Hohlwelle auf der Abtriebswelle des Kegelscheibengetriebes gelagert und mit Hilfe von Schaltkupplungen wahlweise mit dem Verteilergetriebe oder der Abtriebswelle des Kegelscheibengetriebes verbindbar ist. In diesem Fall braucht ja zur Verbindung der Vorgelegewelle des mehrgängigen Schaltgetriebes mit dem Verteilergetriebe lediglich die hiefür vorgesehene Schaltkupplung betätigt zu werden, sodass der Antriebstrang für das Nutzfahrzeug vom Antriebsmotor über das Verteilergetriebe und das Schaltgetriebe zu den Antriebsrädern führt. Wird hingegen über die hiefür vorgesehene Schaltkupplung die Vorgelegewelle des Schaltgetriebes mit der Abtriebswelle des Kegelscheibengetriebes verbunden, so wird das Kegelscheibengetriebe in den Antriebstrang mit eingebunden. Bei einem vorgegebenen Schaltzustand des Schaltgetriebes kann daher die Fahrgeschwindigkeit des Nutzfahrzeugs allein über das Kegelscheibengetriebe gesteuert werden.

Vorzugsweise steht auch der Hydraulikmotor mit Hilfe einer Schaltkupplung über eine Getriebestufe mit der Vorgelegewelle des Schaltgetriebes in Antriebsverbindung, sodass der Fahrantrieb mit Hilfe des Hydraulikmotors bei vorgegebenen Schaltstufen des Schaltgetriebes stufenlos gesteuert werden kann, wobei die Zapfwelle gesondert angetrieben und hinsichtlich der Drehzahl geregelt werden kann. Um eine Wegzapfwelle zu erreichen, ist eine gesonderte Zapfwelle mit der Abtriebsseite des Schaltgetriebes zu verbinden, wie dies bekannt ist.

Zur Konstruktionsvereinfachung kann die Abtriebswelle des Verteilergetriebes für das Schaltgetriebe als Hohlwelle auf der Abtriebswelle des Kegelscheibengetriebes gelagert und mit Hilfe einer Schaltkupplung mit der Vorgelegewelle des Schaltgetriebes verbunden werden, sodass beim Einrücken dieser Schaltkupplung die Vorgelegewelle des Schaltgetriebes mit der hiefür vorgesehenen hohlen Abtriebswelle des Verteilergetriebes in Antriebsverbindung steht. Diese Konstruktion erlaubt außerdem, dass die über das Verteilergetriebe antreibbare Zapfwelle in einfacher Weise über ein Zwischengetriebe angetrieben werden kann, das mit Hilfe der eine Umschalteinrichtung bildenden Schaltkupplung mit der Hohlwelle der Abtriebswelle für das Schaltgetriebe verbunden werden kann, wenn der Einsatz dieser Zapfwelle bei einer Unterbrechung der Antriebsverbindung des Verteilergetriebes zur Vorgelegewelle des Schaltgetriebes gewünscht wird.

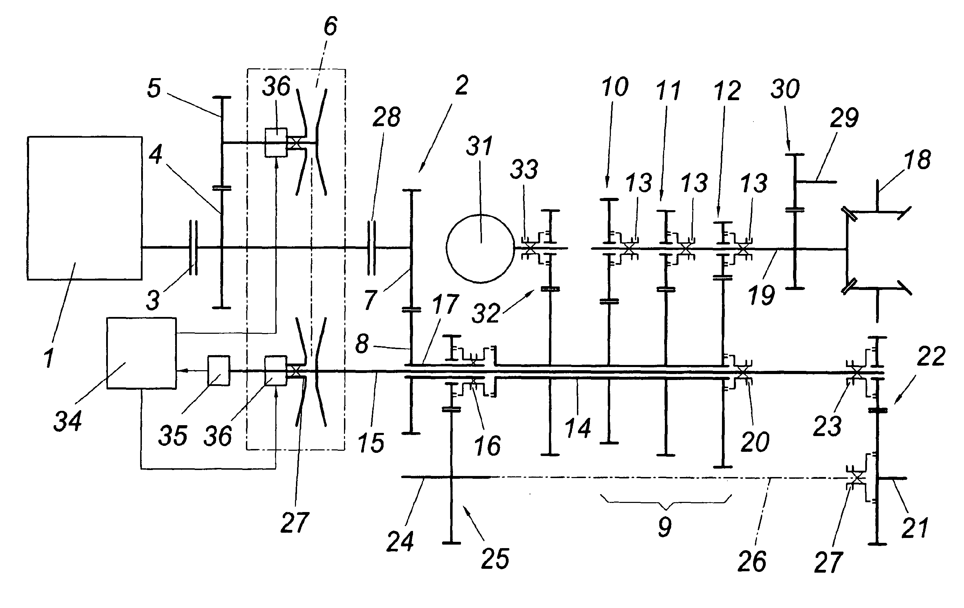

In der Zeichnung ist der Erfindungsgegenstand beispielsweise dargestellt, und zwar wird ein erfindungsgemäßes landwirtschaftliches Nutzfahrzeug in einem schematischen Blockschaltbild dargestellt.

Von einem Antriebsmotor 1 wird ein Verteilergetriebe 2 über eine Fahrkupplung 3 angetrieben, das entweder über einen Zahnrädersatz 4, 5 ein Kegelscheibengetriebe 6 oder über einen Zahnradsatz 7, 8 ein mehrgängiges Schaltgetriebe 9 beaufschlagt, von dem lediglich drei Schaltstufen 10, 11 und 12 angedeutet sind, das aber vorzugsweise engstufig mit mehreren Gängen sowie zumindest einem Rückwärtsgang ausgebildet ist. Die für die Schaltung des Schaltgetriebes 9 vorgesehenen Schaltkupplungen sind mit 13 bezeichnet. Die Vorgelegewelle 14 des Schaltgetriebes 9 ist als Hohlwelle ausgebildet und auf der Abtriebswelle 15 des Kegelscheibengetriebes 6 gelagert. Zur Antriebsverbindung der Vorgelegewelle 14 mit dem Zahnradsatz 7, 8 des Verteilergetriebes 2 ist eine Schaltkupplung 16 vorgesehen, die das ebenfalls über eine Hohlwelle 17 auf der Abtriebswelle 15 des Kegelscheibengetriebes 6 gelagerte Zahnrad 8 mit der Vorgelegewelle 14 kuppelt. Die Antriebsachse 18 des Nutzfahrzeugs kann daher über die Abtriebswelle 19 des Schaltgetriebes 9 in herkömmlicher Weise über das Schaltgetriebe 9 vom Antriebsmotor 1 her angetrieben werden.

Die Abtriebswelle 15 des Kegelscheibengetriebes 6 kann über eine Schaltkupplung 20 wahlweise mit der Vorgelegewelle 14 verbunden werden. Über die Abtriebswelle 15 wird außerdem eine Zapfwelle 21 angetrieben, und zwar in herkömmlicher Weise über ein Zwischengetriebe 22. Zum Einschalten der Zapfwelle 21 dient eine Schaltkupplung 23. Neben der von der Abtriebswelle 15 des Kegelscheibengetriebes 6 angetriebenen Zapfwelle 21 ist eine zusätzliche Zapfwelle 24 vorgesehen, die über ein Zwischengetriebe 25 vom Verteilergetriebe 2 her angetrieben werden kann. Zu diesem Zweck kann das auf der Hohlwelle 17 der Abtriebswelle des Verteilergetriebes 2 gelagerte Antriebsrad des Zwischengetriebes 25 über die als Umschalteinrichtung ausgebildete Schaltkupplung 16 mit der Hohlwelle 17 drehfest verbunden werden. Über eine strichpunktiert angedeutete Antriebsverbindung 26 kann aber auch die Zapfwelle 21 über das Verteilergetriebe 2 angetrieben werden, wenn diese Zapfwelle 21 über die Schaltkupplung 23 vom Kegelscheibengetriebe 6 weggeschaltet und über die Schaltkupplung 27 an die Antriebsverbindung 26 angeschlossen wird. Wird die Zapfwelle 24 bzw. die Zapfwelle 21 über das Verteilergetriebe 2 angetrieben, so können diese Zapfwellen 21, 24 über eine dem Zahnradsatz 7, 8 des Verteilergetriebes 2 vorgeschaltete Reibkupplung 28 auch unter Last geschaltet werden.

Um eine wegabhängige Zapfwelle 29 zu erreichen, muss diese mit der Abtriebswelle 19 des Schaltgetriebes 9 verbunden werden, wie dies im Blockschaltbild über ein Zwischengetriebe 30 angedeutet ist.

Die angetriebene Achse 18 des Nutzfahrzeuges kann nicht nur über den Antriebsmotor 1, sondern auch über einen Hydraulikmotor 31 angetrieben werden, der an das Hydrauliksystem des Nutzfahrzeuges angeschlossen und mit der Vorgelegewelle 14 über eine Getriebestufe 32 verbunden ist. Zwischen der Getriebestufe 32 und dem Hydraulikmotor 31 ist eine Schaltkupplung 33 vorgesehen. Wird bei einem Antriebsmotor 1 mit einem steilen Drehmomentanstieg nur eine geringe Fahrleistung bei niedriger Drehzahl für das Nutzfahrzeug gefordert, so ist der Einsatz des Antriebsmotors 1 aufgrund seiner Drehzahl-Drehmomentcharakteristik ungünstig. Es wird daher vorzugsweise der zusätzliche Hydraulikmotor 31 für den Fahrantrieb eingesetzt, wobei der Antriebsmotor 1 für den Antrieb der Zapfwelle 21 bzw. 24 zur Verfügung steht. Die Drehzahl der Zapfwelle 21 kann dabei über das Kegelscheibengetriebe 6 unabhängig vom Fahrbetrieb stufenlos oder über das Verteilergetriebe 2 in Abhängigkeit von der Drehzahl des Antriebsmotors 1 geregelt werden.

Die Regelung der Drehzahl der Abtriebswelle 15 des Kegelscheibengetriebes 6 erfolgt mit Hilfe einer Steuereinrichtung 34, die über einen Drehzahlgeber 35 angesteuert wird und die Stelltriebe 36 für die verstellbaren Kegelscheiben des Kegelscheibengetriebes 6 ansteuert. Die Steuereinrichtung 34 kann dabei mit dem Drehzahlgeber 35 einen Fliehkraftregler umfassen, mit dessen Hilfe unabhängig von der Drehzahl des Antriebsmotors 1 unter der Voraussetzung eines ausreichenden Übersetzungsverhältnisses eine konstante Drehzahl der Abtriebswelle 15 sichergestellt werden kann. Selbstverständlich ist auch eine elektronische Regelung möglich.

Mit Hilfe der dargestellten Steuereinrichtung 34 lassen sich somit sehr unterschiedliche Einsatzbedingungen für das Nutzfahrzeug erreichen. So ist es beispielsweise möglich, die Fahrgeschwindigkeit und die Drehzahl der Zapfwelle 21 unabhängig von der Drehzahl des Antriebsmotors 1 konstant zu halten, wenn bei einer geschalteten Gangstufe 10, 11 oder 12 des Schaltgetriebes 9 bei eingerückter Schaltkupplung 20 die Vorgelegewelle 14 des Schaltgetriebes 9 über das Kegelscheibengetriebe 6 angetrieben wird. Ist aufgrund einer geforderten Leistung die Drehzahl des Antriebsmotors 1 zu erhöhen, so kann über die Steuereinrichtung 34 die Drehzahl der Abtriebswelle 15 des Kegelscheibengetriebes 6 entsprechend verringert werden, sodass die Drehzahl der Abtriebswelle 19 für die angetriebene Achse 18 und die Drehzahl der Zapfwelle 21 konstant bleibt. Bei einer Verminderung der Motordrehzahl kann das Kegelscheibengetriebe 6 über die Steuereinrichtung 34 gegensinnig beaufschlagt werden, was wiederum zu einer gleichbleibenden Fahrgeschwindigkeit und einem konstanten Zapfwellenantrieb führt. Außerdem wird die Zapfwelle 21 zu einer Energiesparzapfwelle, weil zur Beibehaltung der jeweils geforderten Nenndrehzahl für die Zapfwelle 21 nicht der Antriebsmotor 1 mit einer entsprechend hohen Drehzahl betrieben werden muss, was zum Beispiel beim Bergabfahren besonders unerwünscht ist. Bei einer Drehzahlregelung des Antriebsmotors 1 kann darüber hinaus die Drehzahl der Zapfwelle 21 über das Kegelscheibengetriebe 6 den jeweiligen Anforderungen entsprechend im Vergleich zur Drehzahl des Antriebsmotors 1 angehoben oder abgesenkt werden, sodass die Zapfwelle 21 mit einer konstanten, vorgegebenen Drehzahl betrieben werden kann, und zwar in einem für das Kegelscheibengetriebe 6 günstigen Belastungsbereich.

## Patentansprüche

1. Landwirtschaftliches Nutzfahrzeug mit einem Antriebsmotor (1), mit einem über wenigstens eine Fahrkupplung (3) an den Antriebsmotor (1) angeschlossenen, mit einem Kegelscheibengetriebe (6) verbundenen Verteilergetriebe (2) und mit einer an das Kegelscheibengetriebe (6) anschließbaren, wahlweise unabhängig von einem Antriebstrang für wenigstens eine angetriebene Achse (18) antreibbaren Zapfwelle (21), **dadurch gekennzeichnet, dass** der Antriebstrang für die angetriebene Achse (18) ein wahlweise an das Verteilergetriebe (2) oder das Kegelscheibengetriebe (6) anschließbares, engstufiges, mehrgängiges Schaltgetriebe (9) umfasst.

2. Landwirtschaftliches Nutzfahrzeug nach Anspruch 1, **dadurch gekennzeichnet, dass** das Kegelscheibengetriebe (6) eine Steuereinrichtung (34) für die Drehzahl der Abtriebswelle (15) des Kegelscheibengetriebes (6) aufweist.

3. Landwirtschaftliches Nutzfahrzeug nach Anspruch 1 oder 2, **dadurch gekennzeichnet, dass** eine in Abhängigkeit vom Antrieb des Schaltgetriebes (9) über das Kegelscheibengetriebe (6) an das Verteilergetriebe (2) anschließbare Zapfwelle (24) vorgesehen ist.

4. Landwirtschaftliches Nutzfahrzeug nach Anspruch 3, **dadurch gekennzeichnet, dass** die vom Kegelscheibengetriebe (6) antreibbare Zapfwelle (21) die wahlweise an das Verteilergetriebe (2) anschließbare Zapfwelle (24) bildet oder mit ihr verbindbar ist.

5. Landwirtschaftliches Nutzfahrzeug nach einem der Ansprüche 1 bis 4, **dadurch gekennzeichnet, dass** das Schaltgetriebe (9) mit Hilfe eines gesonderten Hydraulikmotors (31) antreibbar ist.

6. Landwirtschaftliches Nutzfahrzeug nach einem der Ansprüche 1 bis 5, **dadurch gekennzeichnet, dass** die Vorgelegewelle (14) des mehrgängigen Schaltgetriebes (9) als Hohlwelle auf der Abtriebswelle (15) des Kegelscheibengetriebes (6) gelagert und mit Hilfe von Schaltkupplungen (16, 20) wahlweise mit dem Verteilergetriebe (2) oder der Abtriebswelle (15) des Kegelscheibengetriebes (6) verbindbar ist.

7. Landwirtschaftliches Nutzfahrzeug nach Anspruch 5, **dadurch gekennzeichnet, dass** der Hydraulikmotor (31) mit Hilfe einer Schaltkupplung (33) über eine Getriebestufe (32) mit der Vorgelegewelle (14) des Schaltgetriebes (9) in Antriebsverbindung steht.

8. Landwirtschaftliches Nutzfahrzeug nach Anspruch 6, **dadurch gekennzeichnet, dass** die Abtriebswelle des Verteilergetriebes (2) für das Schaltgetriebe (9) als Hohlwelle (17) auf der Abtriebswelle (15) des Kegelscheibengetriebes (6) gelagert und mit Hilfe einer Schaltkupplung (16) mit der Vorgelegewelle (14) des Schaltgetriebes (9) verbindbar ist.

9. Landwirtschaftliches Nutzfahrzeug nach Anspruch 8, **dadurch gekennzeichnet, dass** die über das Verteilergetriebe (2) antreibbare Zapfwelle (24) über ein Zwischengetriebe (25) antreibbar ist, das mit Hilfe der eine Umschalteinrichtung bildenden Schaltkupplung (16) wahlweise mit der Hohlwelle (17) der Abtriebswelle für das Schaltgetriebe (9) verbindbar ist.

## Claims

1. Agricultural utility vehicle having a drive motor (1), having a transfer gear box (2), which is attached via at least one main clutch (3) to the drive motor (1) and is connected to a cone disc gear (6), and having a power take-off shaft (21) which can be attached to the cone disc gear (6) and can be selectively driven independently of a drive chain for at least one driven axle (18), **characterised in that** the drive chain for the driven axle (18) includes a narrow-stepped, multi-geared transmission (9) which can be selectively attached to the transfer gear box (2) or to the cone disc gear (6).

2. Agricultural utility vehicle as claimed in claim 1, **characterised in that** the cone disc gear (6) has a control device (34) for the rotational speed of the driven shaft (15) of the cone disc gear (6).

3. Agricultural utility vehicle as claimed in claim 1 or 2, **characterised in that** a power take-off shaft (24) is provided which can be attached to the transfer gear box (2) via the cone disc gear (6) in dependence upon the drive of the transmission (9).

4. Agricultural utility vehicle as claimed in claim 3, **characterised in that** the power take-off shaft (21) which can be driven by the cone disc gear (6) forms, or can be connected to, the power take-off shaft (24) which can be selectively attached to the transfer gear box (2).

5. Agricultural utility vehicle as claimed in any one of claims 1 to 4, **characterised in that** the transmission (9) can be driven with the aid of a separate hydraulic motor (31).

6. Agricultural utility vehicle as claimed in any one of claims 1 to 5, **characterised in that** the intermediate shaft (14) of the multi-geared transmission (9) is positioned as a hollow shaft on the driven shaft (15) of the cone disc gear (6) and can be connected with the aid of clutches (16, 20) selectively to the transfer gear box (2) or the driven shaft (15) of the cone disc gear (6).

7. Agricultural utility vehicle as claimed in claim 5, **characterised in that** the hydraulic motor (31) is drivingly connected to the intermediate shaft (14) of the transmission (9) with the aid of a clutch (33) via a gear stage (32).

8. Agricultural utility vehicle as claimed in claim 6, **characterised in that** the driven shaft of the transfer gear box (2) for the transmission (9) is positioned as a hollow shaft (17) on the driven shaft (15) of the cone disc gear (6) and can be connected with the aid of a clutch (16) to the intermediate shaft (14) of the transmission (9).

9. Agricultural utility vehicle as claimed in claim 8, **characterised in that** the power take-off shaft (24), which can be driven via the transfer gear box (2), can be driven via an intermediate transmission (25) which, with the aid of the clutch (16) forming a switching device, can be selectively connected to the hollow shaft (17) of the driven shaft for the transmission (9).

## Revendications

1. Véhicule utilitaire agricole avec un moteur de commande (1), avec une boîte de transfert (2) reliée à un variateur à poulies coniques (6) et raccordée par au moins un embrayage (3) au moteur de commande (1) et avec une prise de force (21), pouvant être entraînée, de manière facultative, indépendamment d'une chaîne de traction pour au moins un essieu (18) entraîné et pouvant être raccordée au variateur à poulies coniques (6), **caractérisé en ce que** la chaîne de traction pour l'essieu (18) entraîné comprend une boîte de vitesses (9) à vitesses multiples, à étages courts, pouvant être raccordée facultativement au niveau de la boîte de transfert (2) ou du variateur à poulies coniques (6).

2. Véhicule utilitaire agricole selon la revendication 1, **caractérisé en ce que** le variateur à poulies coniques (6) présente un dispositif de commande (34) pour la vitesse de l'arbre de sortie (15) du variateur à poulies coniques (6).

3. Véhicule utilitaire agricole selon la revendication 1 ou 2, **caractérisé en ce qu'**il est prévu une prise de force (24) pouvant être raccordée en fonction de l'entraînement de la boîte de vitesses (9) par le biais du variateur à poulies coniques (6) à la boîte de transfert (2).

4. Véhicule utilitaire agricole selon la revendication 3, **caractérisé en ce que** la prise de force (21) pouvant être entraînée par le variateur à poulies coniques (6) forme la prise de force (24) pouvant être raccordée facultativement au niveau de la boîte de transfert (2) ou peut être reliée à elle.

5. Véhicule utilitaire agricole selon l'une des revendications 1 à 4, **caractérisé en ce que** la boîte de vitesses (9) peut être entraînée à l'aide d'un moteur hydraulique (31) séparé.

6. Véhicule utilitaire agricole selon l'une des revendications 1 à 5, **caractérisé en ce que** l'arbre de transmission (14) de la boîte de vitesses (9) à vitesses multiples est placé, en tant qu'arbre creux, sur l'arbre de sortie (15) du variateur à poulies coniques (6) et peut être relié au moyen d'embrayages (16, 20), de manière facultative, à la boîte de transfert (2) ou à l'arbre de sortie (15) du variateur à poulies coniques (6).

7. Véhicule utilitaire agricole selon la revendication 5, **caractérisé en ce que** le moteur hydraulique (31) est en liaison d'entraînement au moyen d'un embrayage (33) par le biais d'un rapport de démultiplication (32) avec l'arbre de transmission (14) de la boîte de vitesses (9).

8. Véhicule utilitaire agricole selon la revendication 6, **caractérisé en ce que** l'arbre de sortie de la boîte de transfert (2) pour la boîte de vitesses (9) est placé en tant qu'arbre creux (17) sur l'arbre de sortie (15) du variateur à poulies coniques (6) et peut être relié au moyen d'un embrayage (16) à l'arbre de transmission (14) de la boîte de vitesses (9).

9. Véhicule utilitaire agricole selon la revendication 8, **caractérisé en ce que** la prise de force (24), pouvant être entraînée par le biais de la boîte de transfert (2), peut être entraînée par le biais d'une transmission intermédiaire (25) qui peut être reliée au moyen de l'embrayage (16) formant un dispositif de commutation, facultativement, à l'arbre creux (17) de l'arbre de sortie pour la boîte de vitesses (9).
